# FASCICULE DE BREVET EUROPEEN

(11) **EP 0 708 269 B1**
(45) Date de publication et mention de la délivrance du brevet: **27.01.1999**
(21) Numéro de dépôt: 95402209.1
(22) Date de dépôt: 03.10.1995
(51) Int. Cl.: F16G 1/08, F16G 5/06

(54) **Courroie de transmission de puissance**
Treibriemen
Power transmission belt

(30) Priorité: 20.10.1994 FR 9412542
(43) Date de publication de la demande: 24.04.1996
(73) Titulaire: HUTCHINSON, 75008 Paris (FR)
(72) Inventeur: Winninger, Alain, F-37000 Tours (FR)
(74) Mandataire: Ramey, Daniel

(56) Documents cités:
- FR-A- 2 610 056
- US-A- 3 656 359
- US-A- 4 414 047
- PATENT ABSTRACTS OF JAPAN vol. 1, no. 74 (M-026) 16 Juillet 1977 & JP-A-52 021 549 (UNITTA) 18 Février 1977
- PATENT ABSTRACTS OF JAPAN vol. 13, no. 36 (M-790) 26 Janvier 1989 & JP-A-63 246 530 (BANDO CHEM) 13 Octobre 1988

## Description

L'invention concerne une courroie de transmission de puissance, utilisable dans l'industrie automobile, dans l'électroménager et dans de nombreux autres domaines industriels.

Une courroie de ce type peut être trapézoïdale ou à surface interne striée et comprend en général une armature de câblés enroulés en spires plus ou moins espacées les unes des autres et noyés dans le caoutchouc ou dans l'élastomère de la courroie, ces câblés servant à la transmission des efforts entre une poulie motrice et une ou plusieurs poulies entraînées.

Les vitesses de rotation des poulies peuvent être relativement élevées et elles sont souvent variables. On constate fréquemment en pratique que des brins des courroies, c'est-à-dire des parties de courroie comprises entre deux poulies ou galets, entrent en vibration à certaines vitesses de rotation des poulies ou sur des plages plus ou moins étendues de vitesses de rotation, ces vibrations pouvant générer du bruit et provoquer une usure prématurée des courroies et une réduction de leur durée de service.

On a déjà proposé de nombreuses solutions à ce problème, consistant en général à modifier les formes et les constitutions des courroies pour modifier leur comportement en vibration, celui-ci dépendant beaucoup du choix et de la disposition des câblés.

On a donc cherché à sélectionner les câblés et les dispositions de câblés susceptibles de fournir les meilleurs résultats, non seulement en ce qui concerne le comportement vibratoire des courroies, mais aussi en ce qui concerne la capacité de transmission de puissance et la durée de service.

On a déjà proposé, par exemple dans les Demandes de Brevet JP-A-52021549 et JP-A-63246530, des courroies comprenant des spires de deux câblés de natures différentes pour améliorer la stabilité dimensionnelle, la résistance à la fatigue en flexion ou la capacité de transmission des courroies. On a également proposé, dans le Brevet US 3 656 359 d'utiliser deux groupes juxtaposés de câblés différents pour tenter d'uniformiser la distribution des contraintes dans une courroie à section asymétrique.

Cependant, il existe toujours des cas où des courroies vibrent et génèrent du bruit à certaines vitesses de rotation ou sur certaines plages de vitesses de rotation, en particulier sur des brins relativement très courts ou relativement très longs, et les solutions proposées jusqu'à présent, qui tendent à augmenter la transmission de puissance et la durée de service des courroies, ne permettent pas d'améliorer leur comportement vibratoire.

La présente invention a pour but de résoudre ce problème de façon simple et efficace.

Elle a pour objet une courroie de transmission de puissance qui ait un meilleur comportement en vibration que les courroies actuelles et qui ait de plus une durée de service au moins égale ou supérieure à celle des courroies actuelles.

Elle propose pour cela une courroie de transmission de puissance, comprenant des spires de câblés de natures différentes noyées dans la matière constitutive de la courroie et agencées en alternance, caractérisée en ce que les câblés précités ont des caractéristiques différentes d'amortissement des vibrations et de tenue en fatigue, les uns ayant un meilleur comportement vibratoire et les autres une meilleure tenue en fatigue.

De façon surprenante, mais très efficace et avantageuse, l'invention permet de combiner les avantages présentés par les câblés de types différents tout en évitant ou en réduisant leurs inconvénients.

Ainsi, en particulier, l'association d'un câblé ayant un bon comportement vibratoire et une moyenne tenue en fatigue et d'un câblé ayant un moyen comportement vibratoire mais une bonne tenue en fatigue, permet de réaliser une courroie qui a tout à la fois un bon comportement vibratoire et une longue durée de service.

Dans un mode de réalisation préféré de l'invention, la courroie comprend deux câblés de natures différentes, dont les spires sont dans une alternance 1/1, une spire d'un câblé étant disposée entre deux spires de l'autre câblé et réciproquement.

En variante, les spires de câblés peuvent être dans une alternance différente, où un groupe de spires adjacentes d'un câblé est disposé entre deux groupes de spires d'un autre câblé et réciproquement, les nombres de spires par groupe pouvant être identiques ou différents pour les câblés différents.

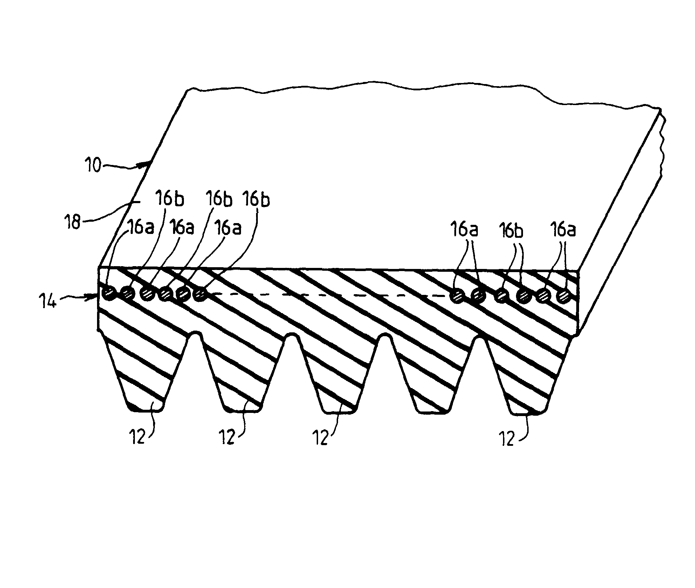

L'invention sera mieux comprise et d'autres caractéristiques, détails et avantages de celle-ci apparaitront plus clairement à la lecture de la description qui suit, faite à titre d'exemple en référence au dessin annexé, qui est une vue schématique en coupe transversale d'une courroie selon l'invention.

Cette courroie 10, qui est destinée par exemple à être montée sur un moteur de véhicule automobile pour l'entraînement en rotation de divers organes tournants tels qu'une pompe, un alternateur, etc, est du type strié et comprend sur sa surface interne un certain nombre de stries circonférentielles 12 ayant une forme trapézoïdale en section transversale, les stries 12 étant parallèles entre elles et s'étendant sur toute la longueur de la courroie, et étant destinées à être engagées dans des gorges de forme correspondante des poulies sur lesquelles cette courroie est montée.

La courroie 10 comprend au moins une nappe 14 de câblés 16 qui sont noyés dans le caoutchouc ou l'élastomère constitutif de la courroie 10, à faible distance de la surface extérieure 18 de cette courroie, les câblés 16 étant enroulés en spirale pour former dans la courroie des spires plus ou moins proches les unes des autres, le nombre de spires compris dans la largeur de la courroie étant fonction des caractéristiques mécaniques souhaitées de cette courroie.

Selon l'invention, on utilise au moins deux câblés différents pour former les spires de la nappe 14, et les spires de câblés différents sont agencées en alternance.

Par exemple, et comme représenté sur la partie gauche de la figure, une spire d'un câblé 16a est située entre deux spires d'un autre câblé 16b et, réciproquement, une spire du câblé 16b est située entre deux spires du câblé 16a. On peut, pour arriver à ce résultat, disposer côte-à-côte le câblé 16a et le câblé 16b et les bobiner en même temps sur une couche de caoutchouc ou d'élastomère lors de la fabrication de la courroie.

On peut également, comme représenté sur la partie droite de la figure, avoir deux spires adjacentes du câblé 16b comprises entre deux groupes de deux spires du câblé 16a, et réciproquement, deux spires adjacentes du câblé 16a étant comprises entre deux groupes de deux spires adjacentes du câblé 16b.

On peut aussi avoir une configuration dans laquelle le nombre de spires d'un câblé est supérieur au nombre de spires de l'autre câblé : par exemple, une configuration formée par la répétition d'un groupe de trois spires consécutives comprenant une spire d'un câblé 16a et deux spires successives d'un câblé 16b.

De façon générale, on peut avoir m spires consécutives d'un câblé 16a disposées entre deux groupes de n spires consécutives d'un autre câblé 16b, m et n étant des entiers supérieurs à 1.

Pour des raisons d'homogénéité de la courroie, il est souhaitable que les nombres m et n ne soient pas trop élevés.

On peut également utiliser plus de deux câblés différents pour former la nappe 14 de la courroie 10, les spires des câblés différents étant disposées en alternance. On peut ainsi avoir par exemple des groupes de trois spires successives de trois câblés différents.

Selon un aspect particulier de l'invention, les câblés différents destinés à constituer l'armature d'une courroie sont sélectionnés en fonction de leurs propriétés d'amortissement des vibrations et de tenue en fatigue dynamique. On peut par exemple associer des câblés de fil polyester à des câblés de fil polyamide et/ou à des câblés de fil aramide.

Les câblés de fil polyester permettent de fabriquer des courroies ayant de bonnes propriétés mécaniques et une bonne tenue en fatigue dynamique. Par contre, ces courroies ont un comportement vibratoire peu satisfaisant, notamment lorsque les brins de courroie entre poulies sont relativement très courts ou relativement très longs.

Les câblés de fil aramide permettent de réaliser des courroies ayant un bon comportement vibratoire, mais une mauvaise tenue en fatigue dynamique et donc une faible durée de service.

Des courroies comprenant des spires alternées de câblés de fil polyester et de fil aramide ont par contre un bon comportement vibratoire, une bonne tenue en fatigue dynamique et une longue durée de service. On a en particulier réalisé des courroies comprenant une alternance de spires de câblé de fil polyester du type 1100 x 2 x 3 (câblé formé de trois groupes de deux fils unitaires de 1100 décitex) ou du type 1100 x 3 x 3 (câblé formé de trois groupes de trois fils unitaires de 1100 décitex), et de câblé de fil aramide par exemple du type 1680 x 1 x 3 (câblé formé de trois fils unitaires de 1680 décitex). Les résultats d'essai de ces courroies ont révélé un excellent comportement vibratoire et une très bonne tenue à la fatigue dynamique.

On peut également améliorer nettement le comportement vibratoire d'une courroie en utilisant une alternance de spires de câblé de fil polyester par exemple du type 1100 x 2 x 3 et de câblé de fil polyamide du type 940 x 1 x 2.

De façon générale, les courroies selon l'invention représentent un progrès notable par rapport à la technique antérieure, en raison du fait qu'elles bénéficient des avantages propres des différents câblés utilisés pour constituer leur armature sans être soumises aux inconvénients propres de ces câblés.

## Revendications

1. Courroie de transmission de puissance, comprenant des spires de câblés (16a, 16b) de natures différentes noyées dans la matière constitutive de la courroie et agencées en alternance, caractérisée en ce que les câblés (16a, 16b) précités ont des caractéristiques différentes d'amortissement des vibrations et de tenue en fatigue, les uns ayant un meilleur comportement vibratoire et les autres une meilleure tenue en fatigue.

2. Courroie selon la revendication 1, caractérisée en ce qu'elle comprend deux câblés(16a, 16b) de natures différentes.

3. Courroie selon l'une des revendications précédentes, caractérisée en ce que les spires de câblés sont dans une alternance 1/1, une spire de câblé (16a) étant disposée entre deux spires d'un autre câblé (16b) et réciproquement.

4. Courroie selon la revendication 1 ou 2, caractérisée en ce que les spires de câblés sont dans une alternance où un groupe de spires consécutives d'un premier câblé (16a) est disposé entre deux groupes de spires consécutives d'un autre câblé (16b) et réciproquement, les nombres de spires par groupe étant identiques pour les deux câblés ou différents.

5. Courroie selon la revendication 1, caractérisée en ce qu'elle comprend plus de deux câblés différents dont les spires sont agencées en alternance dans la courroie.

6. Courroie selon l'une des revendications précédentes, caractérisée en ce que les câblés précités sont choisis parmi les câblés de fil polyester, les câblés de fil aramide et les câblés de fil polyamide.

7. Courroie selon l'une des revendications précédentes, caractérisée en ce qu'elle comprend un câblé de fil polyester, par exemple du type 1100 x 2 x 3 ou 1100 x 3 x 3, enroulé en alternance avec un câblé de fil aramide, par exemple du type 1680 x 1 x 3.

8. Courroie selon l'une des revendications 1 à 6, caractérisée en ce qu'elle comprend un câblé de fil polyester, par exemple du type 1100 x 2 x 3 ou 1100 x 3 x 3, enroulé en alternance avec un câblé de fil polyamide, par exemple du type 940 x 1 x 2.

## Patentansprüche

1. Treibriemen für die Kraftübertragung, umfassend bzw. enthaltend Spiral- bzw. Schraubenwindungen von Kabeln (16a, 16b) von unterschiedlichen Arten, die in dem Material, das den Treibriemen bildet, versenkt und im Wechsel angeordnet sind, dadurch **gekennzeichnet**, daß die vorgenannten Kabel (16a, 16b) unterschiedliche Charakteristika der Vibrationsdämpfung und des Ermüdungs- bzw. Beanspruchungsverhaltens haben, wobei die einen ein besseres Vibrationsverhalten und die anderen ein besseres Ermüdungs- bzw. Beanspruchungsverhalten haben.

2. Treibriemen gemäß dem Anspruch 1, dadurch **gekennzeichnet**, daß er zwei Kabel (16a, 16b) von unterschiedlicher Art umfaßt bzw. enthält.

3. Treibriemen gemäß einem der vorhergehenden Ansprüche, dadurch **gekennzeichnet**, daß die Spiral- bzw. Schraubenwindungen der Kabel in einem Wechsel von 1/1 sind, wobei eine Spiral- bzw. Schraubenwindung des Kabels (16a) zwischen zwei Spiral- bzw. Schraubenwindungen eines anderen Kabels (16b) angeordnet ist, und umgekehrt.

4. Treibriemen gemäß dem Anspruch 1 oder 2, dadurch **gekennzeichnet**, daß die Spiral- bzw. Schraubenwindungen der Kabel in einem Wechsel sind, wo eine Gruppe von aufeinanderfolgenden Spiral- bzw. Schraubenwindungen eines ersten Kabels (16a) zwischen zwei Gruppen von aufeinanderfolgenden Spiral- bzw. Schraubenwindungen eines anderen Kabels (16b) angeordnet ist, und umgekehrt, wobei die Anzahl der Spiralbzw. Schraubenwindungen pro Gruppe für die beiden Kabel identisch oder unterschiedlich ist.

5. Treibriemen gemäß dem Anspruch 1, dadurch **gekennzeichnet**, daß er mehr als zwei unterschiedliche Kabel umfaßt bzw. enthält, deren Spiral- bzw. Schraubenwindungen im Wechsel in dem Treibriemen angeordnet sind.

6. Treibriemen gemäß einem der vorhergehenden Ansprüche, dadurch **gekennzeichnet**, daß die vorgenannten Kabel unter den Kabeln aus Polyesterfaden bzw. -faser bzw. -garn, den Kabeln aus Aramidfaden bzw. -faser bzw. -garn und den Kabeln aus Polyamidfaden bzw. -faser bzw. -garn gewählt sind.

7. Treibriemen gemäß einem der vorhergehenden Ansprüche, dadurch **gekennzeichnet**, daß er ein Kabel aus Polyesterfaden bzw. -faser bzw. -garn, z.B. vom Typ 1100 x 2 x 3 oder 1100 x 3 x 3, umfaßt bzw. enthält, das im Wechsel mit einem Kabel aus Aramidfaden bzw. -faser bzw. -garn, z.B. des Typs 1680 x 1 x 3, gewickelt ist.

8. Treibriemen gemäß einem der Ansprüche 1 bis 6, dadurch **gekennzeichnet**, daß er ein Kabel aus Polyesterfaden umfaßt bzw. enthält, z.B. vom Typ 1100 x 2 x 3 oder 1100 x 3 x 3, das im Wechsel mit einem Kabel aus Polyamidfaden bzw. -faser bzw. -garn, z.B. vom Typ 940 x 1 x 2, gewickelt ist.

## Claims

1. A power transmission belt comprising turns of cords (16a, 16b) of different natures embedded in the constituent material of the belt and disposed in alternation, the power transmission belt being characterized in that the above-mentioned cords (16a, 16b) have different vibration damping and fatigue resistance characteristics, some having better vibration behavior and the others better resistance to fatigue.

2. A belt according to claim 1, characterized in that it comprises two cords (16a, 16b) of different natures.

3. A belt according to any preceding claim, characterized in that the turns of cords alternate 1:1, one turn of one cord (16a) being disposed between two turns of another cord (16b) and vice versa.

4. A belt according to claim 1 or 2, characterized in that the turns of the cords alternate so that a group of consecutive turns of a first cord (16a) is disposed between two groups of consecutive turns of another cord (16b) and vice versa, the number of turns per group being identical for the two cords or different.

5. A belt according to claim 1, characterized in that it comprises more than two different cords having turns organized in alternation in the belt.

6. A belt according to any preceding claim, characterized in that the above-mentioned cords are chosen from among cords of polyester thread, cords of aramid thread and cords of polyamide thread.

7. A belt according to any preceding claim, characterized in that it comprises a cord of polyester thread, for example of the 1100 × 2 × 3 type or the 1100 × 3 × 3 type, wound in alternation with a cord of aramid thread, for example of the 1680 × 1 × 3 type.

8. A belt according to any one of claims 1 to 6, characterized in that it comprises a cord of polyester thread, for example of the 1100 × 2 × 3 type or the 1100 × 3 × 3 type, wound in alternation with a cord of polyamide thread, for example of the 940 × 1 × 2 type.
